# EUROPEAN PATENT APPLICATION

(11) **EP 1 542 308 A2**
(43) Date of publication of application: **15.06.2005**
(21) Application number: 04029084.3
(22) Date of filing: 08.12.2004
(51) Int. Cl.: H01M 16/00, H01M 8/04, H01M 10/46

(54) **Power management system for hybrid fuel cell and battery driven electric vehicles**

(30) Priority: 10.12.2003 CN 203101172789
(71) Applicant: Asia Pacific Fuel Cell Technologies, Ltd., Chunan, Miaoli 350 (TW)
(72) Inventor: YS Yang, Jefferson, CA 92869 (US); Johson, Edward, Torrance CA 90505 (US); Phan, Milton, Anaheim CA 92804 (US); Hsu, Bo-Ching, Taipei Taiwan 103 (TW)
(74) Representative: Goddar, Heinz J., Dr.

(57) **Abstract**

A power management system includes a fuel cell based primary power supply (1) and a rechargeable cell based secondary power supply (2) and a charging control circuit (5) arranged between the two power supplies. A controller (7) applies a charging control signal (Icmd) to the charging control circuit for controlling the magnitude of a charging current for charging the second power supply (2). When the output voltage of the first power supply (Vfc) is greater than that of the second power supply (Vbat), the charging control signal controls the charging current in accordance with a predetermined threshold of the output voltage of the second power supply (Vbat). A switching circuit is arranged between the first power supply (1) and the second power supply (2) for selectively allowing the output voltage of the second power supply (Vbat) to be fed, together with the output voltage of the first power supply (Vfc), to an external load (3), when the output voltage of the second power supply is greater than a predetermined level.

## Description

### FIELD OF THE INVENTION

The present invention relates generally to a power management system for a dual cell power supply, and in particular to a power management system for hybrid fuel cell and battery driven electric vehicles.

### BACKGROUND OF THE INVENTION

A variety of cells/batteries are available in the market, including lead-acid battery, zinc-manganese battery, nickel-cadmium cell, nickel-hydride cell, lithium ion cell, lithium polymer cell, and metal-air fuel cell, such as zinc-air fuel cell, among which the lead-acid battery, the nickel-hydride cell, and the lithium ion cell are better developed than the others. Thus, batteries/cells of these types are commonly employed to power an electrically-driven cart or vehicle.

For most electrically-driven devices that are not fixed in position, electricity is supplied by a battery/cell system. Conventionally, the lead-acid battery or nickel-hydride cell is used in the battery/cell system for the movable power devices. However, such conventional battery/cell system is often subject to limitation imposed by the nature thereof.

Taking an electrical wheelchair as an example, the lead-acid battery is conventionally used to power the electrical wheelchair. However, the electrical wheelchair has different requirements for power consumption in moving on a horizontal surface and in moving upward along a slope. In other words, a nominal power consumption of the electrical wheelchair that is the power consumption when the wheelchair is moving on a horizontal surface is greatly different from peak power consumption when the wheelchair is moving upward along a slope. This makes the conventional power supply system, namely the lead-acid battery system, not suitable for the electrical wheelchair.

Since a power system that includes a single set of battery/cell cannot meet power consumption of electrical devices that require a large range of power supply, dual cell power systems are often employed in such applications. The dual cell power system effectively solves the problem of variation of power consumption. However, the conventional dual cell power system is bulky, weighty, and expensive, and often leads to unnecessary power consumption, which reduces the duty cycle of the power system.

Taking the electrical wheelchair as an example again, the nominal power consumption of the electrical wheelchair is around 200W, while the peak power consumption may get as high as about 1,000W. It becomes a waste of power if the electric wheelchair is operated with the peak power consumption when the wheelchair can be operated with the nominal power consumption. The overall duty cycle of the power supply of the electric wheelchair is thus substantially shortened. Costs for the power consumption are increased.

Thus, the present invention is aimed to provide a power management system for a dual cell power supply in order to overcome and eliminate the drawbacks of the conventional power system for movable electric devices.

### SUMMARY OF THE INVENTION

A primary objective of the present invention is to provide a power management system that controls both a fuel cell and an additional secondary cell.

Another objective of the present invention is to provide a power management system that controls power supplied from a fuel cell and a secondary cell to drive an electrically-driven device and also selectively charges the secondary cell with excessive power supplied from the fuel cell.

A further objective of the present invention is to provide a power management system that controls power supplied to an electric wheelchair from both a fuel cell and a secondary cell.

Yet a further objective of the present invention is to provide a power management system that controls both a fuel cell and a rechargeable cell for supplying power in a parallel manner whereby, in addition to the power supplied from the fuel cell that is used to drive a small load, power is also supplied from the rechargeable cell for driving a large load.

To achieve the above objects, in accordance with the present invention, there is provided a power management system that controls both a fuel cell power system including at least one fuel cell stack and a rechargeable auxiliary power system, wherein a charging control circuit is arranged between the fuel cell stack and the rechargeable auxiliary power system to supply a charging current from the fuel cell stack to the auxiliary power system for charging the later. A micro-controller generates a charging control signal to the charging control circuit for controlling the charging current supplied to the auxiliary power system. When the output voltage of the fuel cell stack is greater than that of the auxiliary power system, the charging control signal supplies the charging current to the auxiliary power system and also controls the magnitude of the charging current in accordance with a predetermined level of output voltage of the auxiliary power system.

The power management system in accordance with the present invention further comprises a switching circuit that is arranged between the fuel cell stack and the auxiliary power system to selectively allow power from auxiliary power system to be fed, simultaneously with the power from the fuel cell stack, to an electrically-driven device.

An application of the power management system of the present invention is the power management of an electrical wheelchair that is powered by both the fuel cell stack and the auxiliary power system. At system start-up, the auxiliary power system supplies power to a blower that conveys air to the fuel cell stack and a micro-controller that controls the operation of the power management system. After the start-up, the fuel cell stack generates and supplies power to the driving device of the electrical wheelchair. The power supplied from the fuel cell stack is sufficient for moving the electrical wheelchair in horizontal surface. In moving upward along a slope, power consumption of the driving device of the electrical wheelchair increases, which is overcome by the additional power supplied from the auxiliary power system. The fuel cell stack also serves to charge the auxiliary power system when power consumption of the electrical wheelchair is lower than that is supplied by the fuel cell stack. In other words, excessive power supplied from the fuel cell power system is charged into the auxiliary power system and such excessive power may later be used to facilitate moving the electrical wheelchair in a condition requiring greater power consumption.

### BRIEF DESCRIPTION OF THE DRAWINGS

The present invention will be apparent to those skilled in the art by reading the following description of a preferred embodiment thereof, with reference to the attached drawings, in which:

**Figure 1** is a perspective view showing an electrical wheelchair in which a power management system for controlling both primary and secondary power systems that selectively supply power to a motor of the electrical wheelchair in accordance with the present invention is embodied;

**Figure 2** is a circuit block diagram of the power management system in accordance with the present invention; and

**Figure 3** is a plot of charging current as a function of charging voltage when the primary power system charges the secondary power system under the control of the power management system of the present invention.

### DETAILED DESCRIPTION OF THE PREFERRED EMBODIMENTS

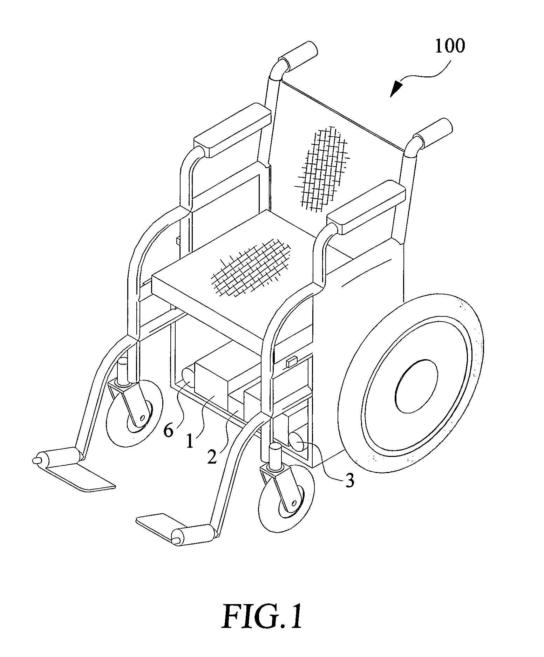

With reference to the drawings and in particular to **Figure 1**, which shows an electric wheelchair, generally designated with reference numeral **100**, in which a power management system constructed in accordance with the present invention is embodied, the electrical wheelchair **100** is equipped with a fuel cell power system which comprises at least one fuel cell stack **1**, serving as a primary power system, and an auxiliary power system **2**, serving as a secondary power system, both selectively supplying power to an electric motor **3** that drives the wheelchair **100**.

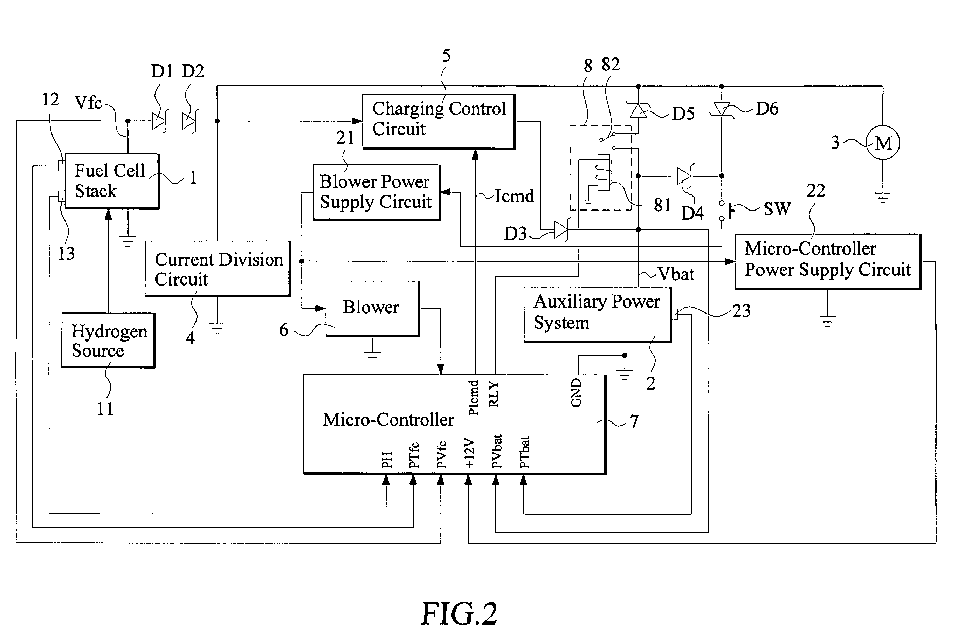

Also referring to **Figure 2**, which shows a circuit diagram of the power management system of the present invention, the power management system controls the power supplied from both the fuel cell stack 1 and the auxiliary power system **2** to the motor **3.** The fuel cell stack **1** supplies an output voltage **Vfc** that is supplied to the motor **3** through diodes **D1, D2.** The motor **3** is parallel connected with a current division circuit **4,** which will be further described. The fuel cell power system comprises a hydrogen source **11**, which supplies hydrogen to the fuel cell stack **1** for electro-chemical reaction inside the fuel cell stack **1**. An example of the hydrogen source is a hydrogen canister that contains substance capable of absorbing and preserving hydrogen.

The fuel cell output voltage **Vfc,** after flowing through the diodes **D1, D2,** is supplied to a charging control circuit **5,** serving as a charging source for the auxiliary power system **2**. The charging power is supplied through a diode **D3** to the auxiliary power system **2** for charging the later.

The auxiliary power system **2** supplies an output voltage **Vbat**, such as 36V DC. The output voltage **Vbat** is supplied through a diode **D4**, a switch **SW** to a blower power supply circuit **21**, which in turn supplies an output voltage, such as 24V, as an operation voltage for a blower **6**.

The auxiliary power system **2** comprises at least one rechargeable cell, such as lithium cell, nickel-hydride cell, and other secondary cells.

A micro-controller power supply circuit **22** receives the output voltage of the blower power supply circuit **21** and in turn provides a micro-controller operation voltage, such as 12V DC, supplied to a micro-controller **7**. The micro-controller **7** controls the operation of the power management system of the present invention.

An output of the auxiliary power system **2** is connected to a first voltage detection terminal **PVbat**, by which the micro-controller **7** detects and monitors the output voltage **Vbat** of the auxiliary power system **2**. A first temperature detector **23** detects the operation temperature of the cell of the auxiliary power system **2** and issues a temperature signal representing the operation temperature of the cell of the auxiliary power system **2** to a first temperature detection terminal **PTbat** of the micro-controller **7**.

The micro-controller **7** comprises a charging current control terminal **PIcmd,** which is coupled to the charging control circuit **5.** The charging current control terminal **PIcmd** issues a charging current control signal **Icmd** to the charging control circuit **5** for controlling the magnitude of the charging current supplied to the auxiliary power system **2**.

The micro-controller **7** further has a second voltage detection terminal **PVfc** that is coupled to the output of the fuel cell stack **1** for detecting the output voltage **Vfc** of the fuel cell stack **1.**

A second temperature detector **12** detects operation temperature of the fuel cell stack **1** and issues a temperature signal representing the operation temperature of the fuel cell stack **1** to a second temperature detection terminal PTfc of the micro-controller **7**. In addition, a hydrogen pressure detector **13** detects the pressure of hydrogen supplied to the fuel cell stack **1** and issues a hydrogen pressure signal representing the hydrogen pressure to a hydrogen pressure detection terminal **PH** of the micro-controller **7**.

A relay **8**, including a coil **81** and a switching contact **82**, is connected between the auxiliary power system **2** and the motor **3** for controlling power supplied from the auxiliary power system **2** to the motor **3**. The coil **81** is coupled to and energized by a relay control terminal **RLY** of the micro-controller **7**, while the switching contact **82** that is connected to the motor **3** via a diode **D5** is selectively engageable with the output of the auxiliary power system **2** under the control of the coil **81**.

When the switch **SW** is actuated, the output voltage **Vbat** is supplied through the diode **D4** and the switch **SW** to the blower power supply circuit **21**, which in turn supplies an output voltage that is fed to the blower **6** as operation voltage to drive the blower **6** to supply air to the fuel cell stack **1**. At the same time, the output voltage of the blower power supply circuit **21** is also fed to the micro-controller power supply circuit **22** and is down converted by the micro-controller power supply circuit **22** to a proper level, such as 12V DC, for operating the micro-controller **7**. Upon receiving the operation voltage, the micro-controller **7** is initialized and performs a predetermined process to start up the fuel cell stack **1**. Hydrogen is then supplied to the fuel cell of the fuel cell stack **1**, which in turn generates and supplies electrical power to the motor **3**.

At system start-up, micro-controller **7** detects the output voltage **Vbat** of the auxiliary power system **2** at an unloaded condition. If the output voltage **Vbat** of the auxiliary power system **2** is lower than a first predetermined value, such as 24V, the micro-controller **7** that issues the charging current control signal **Icmd** controls the charging control circuit **5** to supply the charging current to the auxiliary power system **2**.

If the output voltage **Vbat** of the auxiliary power system **2** is greater than a second predetermined value, such as 18V, the micro-controller **7** energizes, via the relay control terminal **RLY**, the coil **81** of the relay **8** to allow the output voltage **Vbat** of the auxiliary power system **2** to apply to the motor **3** through the switching contact **82** of the relay **8** and the diode **D5**. This allows power from the fuel cell stack **1** and that from the auxiliary power system **2** to be supplied to the motor **3** in a parallel manner. The relay **8**, including the coil **8** and the switching contact **82**, constitutes a switching control circuit that switches between a first power supply condition where only electrical power from the fuel cell stack **1** is supplied to the motor **3** and a second power supply condition where electrical power from both the fuel cell stack **1** and the auxiliary power system **2** are simultaneously supplied to the motor **3** in a parallel manner. The second power supply condition is generally adapted to handle high load operation of the electric wheelchair **100**, while the first power supply condition is adapted in small load operation.

When the switch **SW** is de-actuated, the power supplied from the auxiliary power system **2** to the blower power supply circuit **21** is cut off, which in turn stops supplying power to the blower **6** and the micro-controller **7**. The coil **81** of the relay **8** is de-energized and the switching contact **82** opens. The charging control circuit **5** is also shut down, terminating the charging current supplied therefrom. Under this circumstance, residual power generated by the fuel cell stack 1 is fed through the current division circuit **4** and consumed thereby. In addition, the current division circuit **4** may function to limit an upper bound of the output voltage of the fuel cell stack **1** to for example 36V for protecting the power management system from damage caused by exceedingly high voltage. Further, when the electrical wheelchair **100** decelerates, the motor **3** operates like a generator, which supplies power in the reversed direction that may damage the power management system. The current division circuit **4** also functions to eliminate the reversed power and protect the system and the fuel cell from being damaged by the reversed power. All these facilitate protection of the fuel cell and power management system from damage caused by residual and/or undesired power. The current division circuit **4** may comprise a resistor or the like to consume the residual power.

In accordance with the present invention, whenever the output voltage **Vfc** of the fuel cell stack **1** is greater than the output voltage **Vbat** of the auxiliary power system **2**, the charging control circuit **5** charges the auxiliary power system **2**. The output voltage **Vbat** of the auxiliary power system **2** is fed to the micro-controller **7**, which in turn issues the charging control signal **Icmd.** The output voltage **Vbat** of the auxiliary power system **2** determines the charging control signal **Icmd.** Thus, when the output voltage **Vbat** of the auxiliary power system **2** reaches a predetermined level, which indicates that the rechargeable cell of the auxiliary power system **2** is fully charged, the charging control signal **Icmd** has a magnitude of **"0".** For example, in an unloaded condition, when the output voltage **Vbat** of the auxiliary power system **2** is around the predetermined level, such as 27V, which means the rechargeable cell of the auxiliary power system **2** is fully charged, the charging control signal **Icmd** issued by the micro-controller **7** carries a zero ampere current.

When the unloaded output voltage **Vbat** of the auxiliary power system **2** is lower than the predetermined level, such as 27V, the charging control circuit **5** generates a charging current to charge the auxiliary power system **2**. The charging current can be determined for example in proportion to the output voltage **Vbat** of the auxiliary power system **2**.

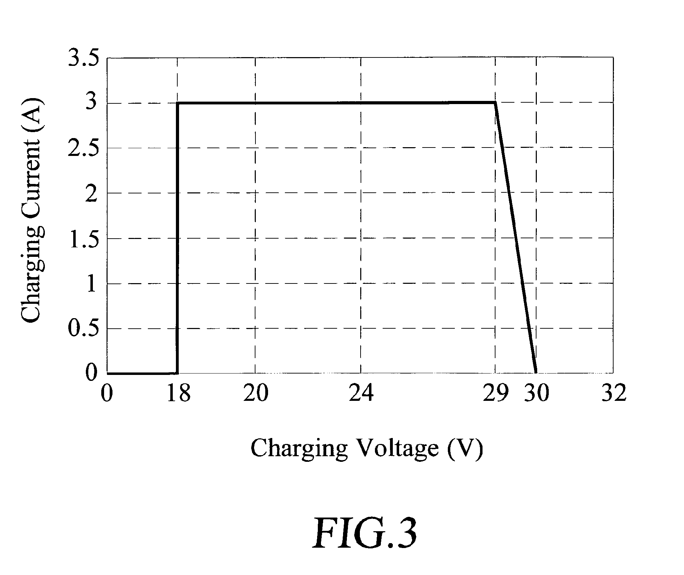

An example of setting the charging current that charges the auxiliary power system **2** is illustrated in **Figure 3**. When the output voltage **Vbat** of the auxiliary power system **2** is between 18-29V, the charging control circuit **5** generates a charging current of 3A to charge the auxiliary power system **2.** With the progress of the charging process, the output voltage **Vbat** of the auxiliary power system **2** increases. Once the output voltage **Vbat** reaches 29V, the micro-controller **7** decreases the charging control signal **Icmd** in a linear manner, which in turn linearly decreases the charging current from the charging control circuit **5** whereby when the output voltage **Vbat** reaches 30V, the charging current becomes 0A and charging to the auxiliary power system **2** is ceased.

In discharging, when the output voltage **Vbat** lowers to a predetermined level, such as 18V, which indicates that the rechargeable cell of the auxiliary power system **2** is completely discharged, for the sake of safety, the discharging of the auxiliary power system **2** is terminated. Further, when the operation temperature Tbat of the auxiliary power system **2** is equal to or higher than 60°C, which indicates an abnormal condition, the auxiliary power system **2** is shut down. When the hydrogen pressure detector **13** shows that the pressure of hydrogen supplied to the fuel cell stack **1** of the fuel cell power system is lower than 10 psig, which indicates the hydrogen source of the fuel cell stack **1** runs up, the hydrogen source is shut down.

With the arrangement of the charging control circuit **5** between the fuel cell stack **1** and the auxiliary power system **2**, power supply of different combination between two power systems can be realized, which allows for operation of the electrical device, such as the electrical wheelchair, in a more power efficient and better controlled manner. Maintaining the power level of the auxiliary power system **2** can also be realized in a simple and effective way by issuing a single charging control signal **Icmd** that controls the current charging the auxiliary power system **2**.

The present invention adapts a dual cell power supply, which combines a rechargeable cell with a primary, fuel cell power system to provide an extra amount of power to handle peak power consumption. Such a rechargeable cell based auxiliary power system also serves to start up the whole power supply system, which is primarily operated with the fuel cell stack at nominal power consumption, which in the example of electrical wheelchair is around 200W, while the peak power consumption, which is averagely 400W, but can sometimes reach as high as 1,000W, is shared by both power systems.

Although the present invention has been described with reference to the preferred embodiment thereof, it is apparent to those skilled in the art that a variety of modifications and changes may be made without departing from the scope of the present invention which is intended to be defined by the appended claims.
The features disclosed in the foregoing description, in the claims and/or in the accompanying drawings may, both separately and in any combination thereof, be material for realising the invention in diverse forms thereof.

## Claims

1. A power management system comprising:
a fuel cell power system comprising at least one fuel cell stack that carries out electro-chemical reaction between a fuel and air to provide a first output voltage;
an auxiliary power system comprising a rechargeable unit to provide a second output voltage;
a charging control circuit receiving the first output voltage from the fuel cell power system and providing a charging current to the auxiliary power system;
a controller generating a charging control signal to the charging control circuit for controlling the charging current supplied to the auxiliary power system;
wherein the charging control signal controls magnitude of the charging current in accordance with a predetermined level of second output voltage under the condition when the first output voltage is greater than the second output voltage.

2. The power management system as claimed in Claim 1 further comprising an air supply that feeds air to the fuel cell stack, the air supply comprising a blower that receives an operation voltage from a blower power supply circuit, to which the second output voltage is applied through a switch whereby when the switch is actuated, the second output voltage is applied to the blower power supply circuit that in turn applies the blower operation voltage to the blower for conveying air to the fuel cell stack.

3. The power management system as claimed in Claim 1 further comprising a current division circuit connected to the first output voltage of the fuel cell power system.

4. The power management system as claimed in Claim 1 further comprising a switching circuit that selectively allows for power from both the fuel cell power system and the auxiliary power system to be supplied to an external load at the same time.

5. The power management system as claimed in Claim 4, wherein the external load comprises an electrical wheelchair.

6. The power management system as claimed in Claim 1, wherein the rechargeable unit of the auxiliary power system comprises a nickel-hydride cell.

7. A power management system comprising:
a fuel cell power system comprising at least one fuel cell stack that carries out electro-chemical reaction between a fuel and air to provide a first output voltage;
an auxiliary power system comprising a rechargeable unit to provide a second output voltage;
a switching circuit that selectively allows for power from both the fuel cell power system and the auxiliary power system to be supplied to an external load at the same time;
a controller coupled to the switching circuit to control switching operation of the switching circuit, the controller being further coupled to a voltage detector that detects the second output voltage of the auxiliary power system;
wherein when the second output voltage of the auxiliary system that is detected by the voltage detector is greater than a predetermined level, the switching circuit performs a switching operation to allow the power from the auxiliary power system to be supplied to the external load simultaneously with the power from the fuel cell power system.

8. The power management system as claimed in Claim 7 further comprising an air supply that feeds air to the fuel cellstack, the air supply comprising a blower that receives an operation voltage from a blower power supply circuit, to which the second output voltage is applied through a switch whereby when the switch is actuated, the second output voltage is applied to the blower power supply circuit that in turn applies the blower operation voltage to the blower for conveying air to the fuel cell stack.

9. The power management system as claimed in Claim 7 further comprising a charging control circuit receiving the first output voltage from the fuel cell power system and providing a charging current to the auxiliary power system, and wherein the controller generates a charging control signal to the charging control circuit for controlling the charging current supplied to the auxiliary power system, and wherein the charging control signal controls magnitude of the charging current in accordance with a predetermined level of output voltage under the condition when the first output voltage is greater than the second output voltage.

10. The power management system as claimed in Claim 7 further comprising a current division circuit connected to the first output voltage of the fuel cell power system.

11. The power management system as claimed in Claim 7, wherein the external load comprises an electrical wheelchair.

12. The power management system as claimed in Claim 7, wherein the rechargeable unit of the auxiliary power system comprises a nickel-hydride cell.
